# EUROPÄISCHE PATENTSCHRIFT

(11) **EP 3 335 533 B1**
(45) Veröffentlichungstag und Bekanntmachung des Hinweises auf die Patenterteilung: **11.09.2019**
(21) Anmeldenummer: 17401121.3
(22) Anmeldetag: 07.12.2017
(51) Int. Cl.: A01B 73/00

(54) **MEHRREIHIGE EINZELKORNSÄMASCHINE MIT TELESKOPRAHMEN**
MULTI-ROW PRECISION SEED DRILL WITH TELESCOPE FRAME
SEMOIR MONOGRAINE À PLUSIEURS RANGÉES À CADRE TÉLESCOPIQUE

(30) Priorität: 13.12.2016 DE 102016124131
(43) Veröffentlichungstag der Anmeldung: 20.06.2018
(73) Patentinhaber: Amazonen-Werke H. Dreyer GmbH & Co. KG, 49205 Hasbergen (DE)
(72) Erfinder: Mertens, Daniel, 26121 Oldenburg (DE)

(56) Entgegenhaltungen:
- EP-A1- 2 030 495
- EP-A1- 3 228 164
- EP-A1- 3 228 170
- WO-A2-2008/024760
- CN-U- 202 889 916
- DE-U1- 29 908 130
- US-A- 4 112 649

## Beschreibung

Die Erfindung betrifft eine mehrreihige Einzelkornsämaschine gemäß dem Oberbegriff des Patentanspruches 1.

Eine derartige mehrreihige Einzelkornsämaschine ist in der DE 41 38 237 A1 beschrieben. Die beschriebene Einzelkornsämaschine weist einen Rahmen auf, welcher quer zur Fahrrichtung angeordnet und teleskopartig in seiner Breite veränderlich ist. Dazu ist ein innerer Rohrabschnitt gleitverschieblich innerhalb eines äußeren Rohrabschnitts geführt. Die gleitverschiebliche Führung des inneren Rohrabschnitts innerhalb des äußeren Rohrabschnitts erfolgt mittels Verbindungselementen, welche den inneren und äußeren Rohrabschnitt möglichst spielfrei und verdrehgesichert miteinander verbinden. Dadurch wird zusätzlich eine Fixierung beider Rohrabschnitte in einer gewünschten Relativlage erreicht.

Die in der DE 41 38 237 A1 beschriebenen Rohrabschnitte sind als Vierkantrohre ausgeführt. Der innere Rohrabschnitt ist mit Gleitelementen versehen, mittels derer er sich gegen die Innenseite des äußeren Rohrabschnitts abstützt. Es werden Gleitelemente verschiedener Ausführungsformen vorgeschlagen, welche stets an den Innenseiten des äußeren Vierkantrohres anliegen.

Einzelkornsämaschinen der beschriebenen Art weisen eine Vielzahl an Säaggregaten auf, welche beabstandet zueinander an dem äußeren und dem inneren Rohrabschnitt des Teleskoprahmens befestigt sind. Der Schwerpunkt der Säaggregate liegt außerhalb der Rohrabschnitte des Telekoprahmens, weswegen sie über ihre Aufhängung ein Drehmoment auf die Rohrabschnitte des Teleskoprahmens bewirken.

Ein auf den inneren Rohrabschnitt wirkendes Drehmoment bewirkt eine Torsion zwischen dem inneren und dem äußeren Rohrabschnitt. Selbst bei der beschriebenen verdrehgesicherten Führung des inneren Rohrabschnitts innerhalb des äußeren Rohrabschnitts wird diese Torsionskraft in die Rohrabschnitte des Rahmens eingebracht. Sie bewirkt eine erhöhte Reibung zwischen den Gleitelementen und der Innenseite des äußeren Rohrabschnittes. Dies führt bei der in der DE 41 38 237 A1 beschriebenen Ausführungsform des Teleskoprahmens in nachteiliger Weise nicht nur zu einer hohen Gleitreibung sowie einem stark erhöhten Verschleiß der Gleitelemente, sondern vor allem zu einer ungleichmäßigen Krafteinleitung in die Seitenflächen des äußeren Vierkantrohres. Zusätzlich ist nachteilig, Rohrabschnitte mit Vierkantprofil nur ein vergleichsweise geringes Flächenträgheitsmoment aufweisen und sich somit unter Krafteinwirkungen vergleichsweise leicht verformen. Die großen Seitenflächen eines Vierkantrohres sind dabei besonders verformungsanfällig. Dadurch werden Spannungen in den Teleskoprahmen eingebracht, welche zur Verminderung seiner beschriebenen Teleskopiereigenschaften führen und die Stabilität des Rahmens gefährden.

Der Erfindung liegt daher die Aufgabe zugrunde, einen Teleskoprahmen zu schaffen, welcher eine hohe Stabilität aufweist, unempfindlich gegen auftretende Torsionskräfte und zuverlässig teleskopierbar ist.

Diese Aufgabe wird erfindungsgemäß dadurch gelöst, dass zumindest der äußere Rohrabschnitt ein zumindest annähernd H-förmiges Querschnittsprofil aufweist, wobei die Auskragungen des H-förmigen Querschnittsprofils als keilförmige Nuten ausgebildet sind, und der mindestens eine innere Rohrabschnitt mittels Gleitelementen formschlüssig innerhalb des äußeren Rohrabschnitts geführt ist, wobei die Gleitelemente an den Innenseiten der keilförmigen Auskragungen des zumindest annähernd H-förmigen Querschnittsprofils des äußeren Rohrabschnitts anliegen.

Vorteilhaft ist bei dieser Ausgestaltung, dass ein H-förmiges Querschnittsprofil aufgrund seines hohen Flächenträgheitsmoments besonders stabil und unanfällig gegen Verformungen ist. Dadurch wird der Verschleiß des Rahmens der Einzelkornsämaschine erheblich reduziert und eine lange Lebensdauer sichergestellt. Die formschlüssige Führung des zumindest einen inneren Rohrabschnitts innerhalb des äußeren Rohrabschnitts ermöglichst ein zuverlässiges Teleskopieren und verhindert eine ungleichmäßige Belastung der Bauteile.

Der Formschluss zwischen dem äußeren Rohrabschnitt und dem zumindest einen inneren Rohrabschnitt wird erreicht, indem der zumindest eine innere Rohrabschnitt einen dem Querschnitt des äußeren Rohrabschnitts zumindest annähernd kongruent ausgeführten Querschnitt aufweist. Insbesondere weist der zumindest eine innere Rohrabschnitt ebenfalls einen zumindest annähernd H-förmig ausgebildeten Querschnitt auf. In diesem Fall sind die nachfolgenden Stabilitätsbetrachtungen, welche sich auf die H-förmige Geometrie des Querschnitts des äußeren Rohrabschnitts beziehen in analoger Weise auf einen inneren Rohrabschnitt mit H-förmigen Querschnitt anzuwenden.

Der Formschluss kann alternativ dadurch erreicht werden, dass zwischen dem äußeren und dem zumindest einen inneren Rohrabschnitt geeignete Verbindungselemente vorgesehen sind. In diesem Fall kann der zumindest eine innere Rohrabschnitt beispielsweise ein kostengünstiges Vierkantprofil aufweisen.

Der erfindungsgemäße Teleskoprahmen kann in Fahrtrichtung links- und/oder rechtsseitig einen inneren Rohrabschnitt oder mehrere innere Rohrabschnitte aufweisen. Sind auf einer Seite mehrere innere Rohrabschnitte vorgesehen, sind die mehreren inneren Rohrabschnitte einer Seite in analoger Weise formschlüssig und gleitverschieblich ineinander gelagert.

Zwischen dem zumindest einen inneren und dem äußeren Rohrabschnitt sind Gleitelemente zur Reduzierung der auftretenden Gleitreibungskräfte und Verbesserung der Teleskopiereigenschaften vorgesehen. Diese dienen als Kontaktflächen zwischen dem zumindest einem inneren und dem äußeren Rohrabschnitt und somit der Übertragung aller auftretenden Kräfte zwischen dem zumindest einen inneren und dem äußeren Rohrabschnitt. Durch die Anordnung der Gleitelemente an den Innenseiten der keilförmigen Auskragungen werden die auftretenden Kräfte im Wesentlichen in den Bereichen der keilförmigen Auskragungen in den äußeren Rohrabschnitt eingeleitet. Diese Bereiche weisen besonders hohe Flächenträgheitsmomente auf und sind daher besonders unempfindlich gegen Verformungen. Somit sind diese Bereiche in besonderem Maße geeignet, auftretende Kräfte aufzunehmen, wobei der Verschleiß an den Bauteilen minimal ist.

Auftretende Kräfte sind beispielsweise Gleitreibungskräfte während des Teleskopierens oder drehmomentbedingte Torsions- oder Biegekräfte. Torsionskräfte werden in der beschriebenen Weise durch die Anbringung von Arbeitswerkzeugen, wie beispielsweise Säaggregaten, an dem inneren Rohrabschnitt mit ihrem außerhalb der Längsachse der Rohrabschnitte liegenden Schwerpunkt hervorgerufen. Biegekräfte treten, insbesondere im austeleskopierten Zustand, durch die einseitige Befestigung des zumindest einen inneren Rohrabschnitts am äußeren Rohrabschnitt auf, wie sie allgemein von Kragträgern bekannt ist.

Es ist vorteilhaft, dass die keilförmigen Auskragungen des zumindest annähernd H-förmigen Querschnittsprofils des äußeren Rohrabschnitts ausgehend von den Außenkanten des äußeren Rohrabschnitts in Richtung der Mitte der Seitenflächen des äußeren Rohrabschnitts schräg abfallende Seitenflächen aufweisen. Diese Seitenflächen lassen sich in vorteilhafter Weise als Auflageflächen für die Gleitelemente nutzen. Dadurch kann das große Flächenträgheitsmoment eines zumindest annähernd H-förmigen Querschnittprofils genutzt und gleichzeitig eine maximal ausgedehnte Auflagefläche für die Gleitelemente bereitgestellt werden. Durch die maximierte Fläche werden die auftretenden Kräfte besser verteilt und der Verschleiß der kraftbeaufschlagten reduziert.

Zudem ergibt sich der Vorteil, dass der äußere Rohrabschnitt durch diese Maßnahme keilförmige bzw. dreiecksförmige Auskragungen aufweist, welche in vorteilhafter Weise komfortabel zur Anbringung von Arbeitswerkzeugen, beispielsweise Säaggregaten, genutzt werden können.

Es ist von Vorteil, dass die schrägabfallenden Seitenflächen der Auskragungen des äußeren Rohrabschnitts parallel zueinander verlaufende Innenseiten und Außenseiten aufweisen. Somit ergibt sich für den gegen Verformung unanfälligen äußeren Rohrabschnitt ein geringer Material- und/oder Fertigungsaufwand.

Es ist vorteilhaft, dass jeweils eine als keilförmige Nut ausgebildete Auskragung an den vier Kanten zumindest des äußeren Rohrabschnitts angeordnet ist. Auf diese Weise ist der äußere Rohrabschnitt an seinen vier Kanten mit einem ein besonders großes Flächenträgheitsmoment aufweisenden Bereich versehen. Dies maximiert die Unanfälligkeit des äußeren Rohrabschnitts gegen Verformung. Zusätzlich ist somit an jeder Kante des äußeren Rohrabschnitts eine maximierte Auflagefläche für die Gleitelemente vorhanden. Der zumindest eine innere Rohrabschnitt stützt sich somit spielfrei und symmetrisch innerhalb des äußeren Rohrabschnitts ab, wodurch eine besonders hohe Stabilität erreicht wird.

Es wird ein besonderer Vorteil erreicht, indem die schräg abfallenden Seitenflächen der keilförmigen Auskragungen auf der Ober- und der Unterseite des äußeren Rohrabschnitts angeordnet sind. Durch diese Maßnahme werden die Abmessungen oberen und unteren Seitenflächen des äußeren Rohrabschnitts reduziert, wodurch sie unempfindlicher gegen auf sie einwirkende Torsionskräfte werden. Gleichzeitig werden durch diese Maßnahme die aufrecht stehenden vorderen und hinteren Seitenflächen des äußeren Rohrabschnitts verlängert. Dies ist besonders vorteilhaft, da die Stärke von Auswirkungen von Biegekräften im Wesentlichen von den Abmessungen des sich biegenden Bauteils in Richtung der angreifenden Biegekraft abhängt. In vereinfachter Weise kann formuliert werden, dass sich ein Bauteil weniger stark verbiegt, je größer dessen Abmessungen in Richtung der Biegekraft sind.

Der äußere Rohrabschnitt ist in seinem mittleren Bereich mit dem übrigen Rahmen der Einzelkornsämaschine verbunden. Die über seine gesamte Breite beabstandet angeordneten Arbeitswerkzeuge sowie der zumindest eine in beschriebener Weise befestigte innere Rohrabschnitt üben schwerkraftbedingt eine Biegekraft in senkrechter Richtung auf den äußeren Rohrabschnitt aus. Die durch die keilförmigen Auskragungen vergrößerten senkrechten Seitenflächen des äußeren Rohrabschnitts wirken diesen Biegekräften durch ein besonders großes axiales Flächenträgheitsmoment des zumindest annähernd H-förmigen Querschnittsprofils besonders wirkungsvoll entgegen.

Es ist vorteilhaft, dass die schräg abfallenden Seitenflächen zumindest annähernd aufeinander zulaufen. Auf diese Weise kann geometrisch und baulich in einfacher Weise erreicht werden, dass der zumindest annähernd H-förmige Querschnitt des äußeren Rohrabschnitts die beschriebene Geometrie mit zwei verkleinerten und zwei vergrößerten Seitenflächen aufweisen, welche sich jeweils gegenüber liegen.

Es wird ein Vorteil dadurch erreicht, dass der mindestens eine innere Rohrabschnitt innerhalb des äußeren Rohrabschnitts durch die formschlüssige Führung mittels der Gleitelemente zentriert ist. Durch eine zentrierte Führung des zumindest einen inneren Rohrabschnitts innerhalb des äußeren Rohrabschnitts stützt sich der zumindest eine innere Rohrabschnitt gleichmäßig über die Gleitelemente gegen den äußeren Rohrabschnitt ab. Dadurch werden die auftretenden Kräfte gleichmäßig verteilt und ein Verkanten des zumindest einen inneren Rohrabschnitt gegen den äußeren Rohrabschnitt verhindert. Dies sichert optimale Gleit- und Teleskopiereigenschaften und reduziert den Verschleiß.

Es ist vorteilhaft, dass die Gleitelemente zumindest annähernd ganzflächig an den Innenflächen der Auskragungen des zumindest annähernd H-förmigen Querschnittsprofils des äußeren Rohrabschnitts anliegen. Es wird dadurch eine ungleichmäßige Auflage und eine ungleichmäßige Kraftübertragung verhindert. Durch eine größere Auflagefläche der Gleitelemente wird zudem der durch sie auf die Innenflächen des äußeren Rohrabschnitts ausgeübte Druck reduziert. Dadurch ergibt sich eine geringere Gleitreibung und es wird ein verschleißarmes sowie energiesparendes Teleskopieren ermöglicht. Durch das Anliegen der Gleitelemente an den Innenflächen der Auskragungen werden die auftretenden Kräfte in die aufgrund eines hohen Flächenträgheitsmoments besonders formstabilen Bereiche des äußeren Rohrabschnitts eingebracht.

Es ist von Vorteil, dass die Gleitelemente zumindest annähernd ganzflächig an den Innenflächen der schräg aufeinander zulaufenden Seitenflächen der Auskragungen des zumindest annähernd H-förmigen Querschnittsprofils des äußeren Rohrabschnitts anliegen. Durch das Anliegen der Gleitelemente an den schrägen Seitenflächen steht eine maximale Auflagefläche für die Gleitelemente zur Verfügung. Durch eine möglichst große Auflagefläche können größere Gleitelemente verwendet werden. Dies senkt in der beschriebenen Weise die auftretende Gleitreibung und führt zu verbesserten Teleskopiereigenschaften.

Es wird ein Vorteil erreicht, indem sich bei einem Verdrehen des mindestens einen inneren Rohrabschnitts gegen den äußeren Rohrabschnitt der zumindest eine innere Rohrabschnitt über die Gleitelemente gegen die Innenseite der aufeinander zulaufenden Seitenflächen der keilförmigen Auskragungen des zumindest annähernd H-förmigen Querschnittsprofils des äußeren Rohrabschnitts abstützt. In der beschriebenen Weise wird ein Verdrehen des mindestens einen inneren Rohrabschnitts gegen den äußeren Rohrabschnitt beispielsweise durch die Anbringung von Arbeitswerkzeugen an dem zumindest einen inneren Rohrabschnitt hervorgerufen. Die dadurch wirkenden Torsionskräfte werden dann in die aufgrund ihres hohen Flächenträgheitsmoments besonders formstabilen Bereiche des äußeren Rohrabschnitts eingebracht.

Es ist besonders vorteilhaft, dass die Abmessungen und/oder Innenwinkel der keilförmigen Auskragungen in Abhängigkeit von den Abmessungen des äußeren und des mindestens einen inneren Rohrabschnitts derart gewählt sind, dass die bei Torsion des mindestens einen inneren Rohrabschnitts um die gemeinsame Längsachse des äußeren und mindestens einen inneren Rohrabschnitts auftretenden Torsionskräfte zumindest annähernd senkrecht in die Innenflächen der keilförmigen Auskragungen des äußeren Rohrabschnitts eingeleitet werden. Durch das senkrechte Einleiten der auftretenden Kräfte werden, insbesondere im Zusammenwirken mit dem ganzflächigen Anliegen der Gleitelemente an den Innenflächen der keilförmigen Auskragungen, ein Verkanten und eine ungleichmäßige Kraftübertragung vermieden. Dies reduziert die auftretende Gleitreibung und den, insbesondere ungleichmäßigen, Verschleiß der Gleitelemente und/oder Rohrabschnitte. Zusätzlich werden durch diese Maßnahme bei Torsion stets zumindest zwei sich diagonal gegenüberliegende Gleitelemente belastet. Dadurch können die auftretenden Kräfte in vorteilhafter Weise auf verschiedene Bereiche des äußeren Rohrabschnitts verteilt werden. Eine solche gleichmäßige Belastung des Teleskoprahmens gewährleistet die Langlebigkeit der Einzelkornsämaschine.

Weitere Einzelheiten der Erfindung sind der Beispielsbeschreibung und den Zeichnungen zu entnehmen. Die Zeichnungen zeigen
- Fig.1: den Teleskoprahmen einer Einzelkornsämaschine mit Arbeitswerkzeugen in perspektivischer Ansicht von schräg vorne oben,
- Fig.2: den Teleskoprahmen einer Einzelkornsämaschine in einteleskopiertem Zustand in perspektivischer Ansicht von schräg vorne,
- Fig.3: den Teleskoprahmen einer Einzelkornsämaschine in austeleskopiertem Zustand in perspektivischer Ansicht von schräg vorne,
- Fig.4: die Verbindung zwischen einem inneren Rohrabschnitt und dem äußeren Rohrabschnitt in Detailansicht,
- Fig.5: einen inneren Rohrabschnitt mit Verbindungselementen und Gleitelementen in Detailansicht und
- Fig.6: den Teleskoprahmen mit dem äußeren und einem inneren Rohrabschnitt in seitlicher Querschnittsansicht.

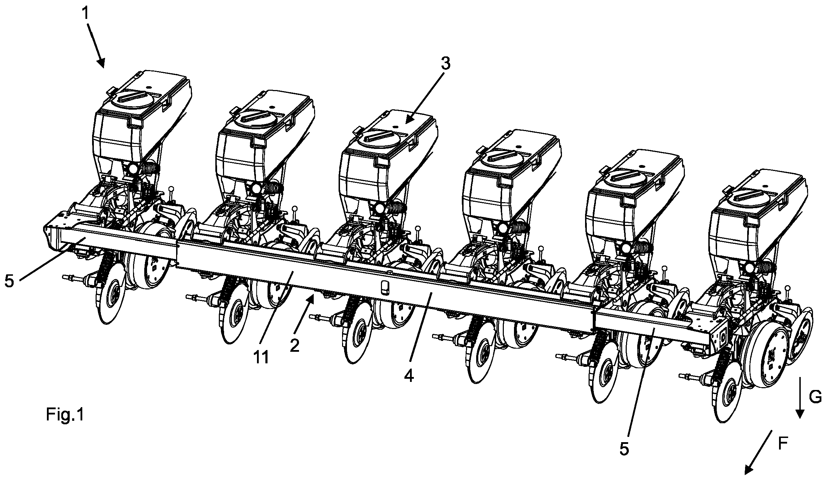

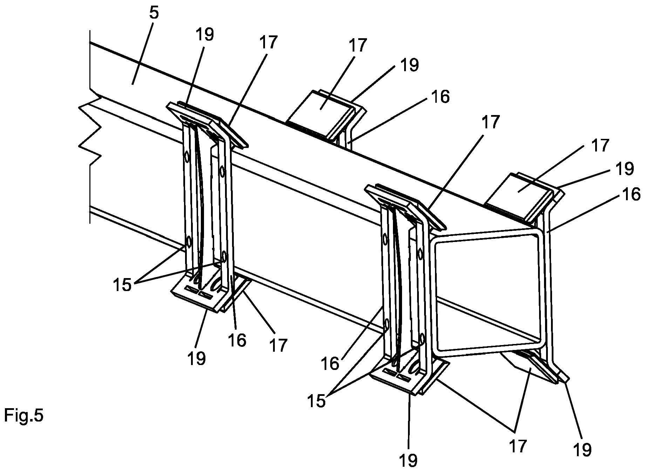

Die in Fig. 1 teilweise dargestellte mehrreihige Einzelkornsämaschine 1 weist einen sich quer zur Fahrtrichtung F erstreckenden Teleskoprahmen 2 auf, welcher zur Aufnahme mehrerer als Säaggregate ausgebildeter Arbeitswerkzeuge 3 vorgesehen ist. Der Teleskoprahmen 2 umfasst im gewählten Beispiel der Fig. 1 bis 6 einen äußeren Rohrabschnitt 4, in dem links- sowie rechtsseitig jeweils ein innerer Rohrabschnitt 5 gleitverschieblich gelagert ist. Die axiale Ausdehnung der inneren Rohrabschnitte 5 beträgt dabei zumindest annähernd die Hälfte der axialen Ausdehnung des äußeren Rohrabschnitts 4.

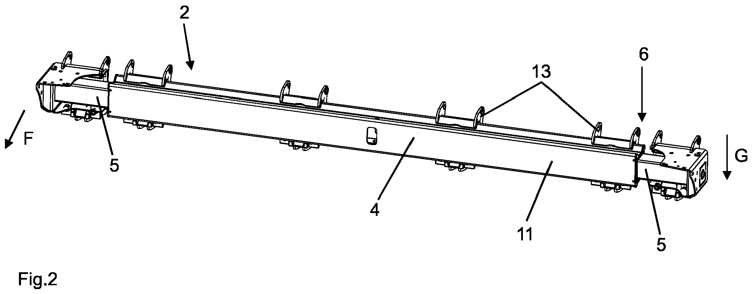

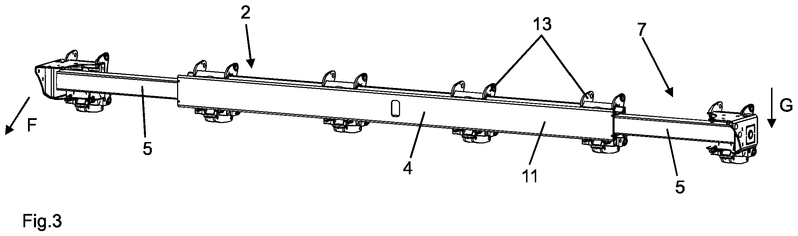

Durch die gleitverschiebliche Lagerung der inneren Rohrabschnitte 5 innerhalb des äußeren Rohrabschnitts 4 ist der Teleskoprahmen 2 zwischen einer vollständig einteleskopierten Transportstellung 6, gezeigt in Fig. 2, und einer austeleskopierten Arbeitsstellung 7, gezeigt in Fig. 3, verbringbar. Dabei ist der Teleskoprahmen 2 derart bemessen, dass er in seiner Transportstellung 6 eine länderspezifische maximal zulässige Straßentransportbreite nicht überschreitet. Die Breite des Teleskoprahmens 2 ist in seiner Arbeitsstellung 7 aufgabenspezifisch abhängig von dem einstellbaren gegenseitigen Abstand der aufgenommenen Arbeitswerkzeuge 3, maximal jedoch auf zumindest annähernd die zweifache axiale Ausdehnung des äußeren Rohrabschnitts 4 begrenzt.

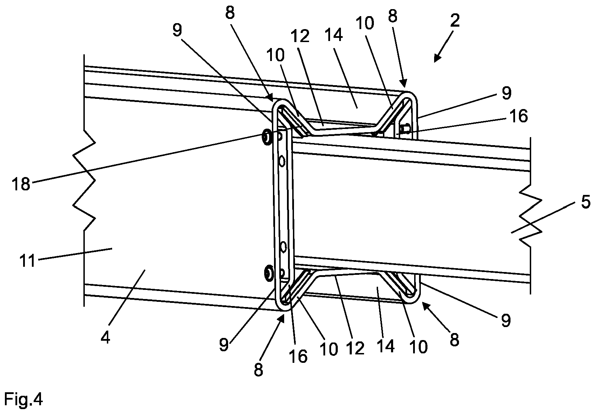

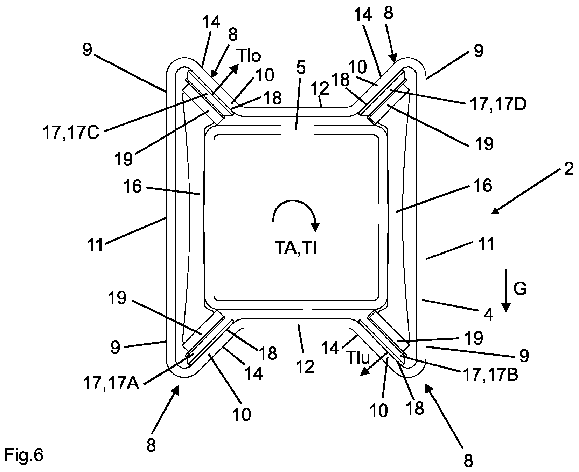

Der äußere Rohrabschnitt 4 weist ein zumindest annähernd H-förmiges Querschnittsprofil auf, wie es in den Fig. 4 und 6 gezeigt ist. Das H-förmige Querschnittsprofil umfasst Auskragungen 8, welche an den vier in axialer Richtung verlaufenden Kanten des äußeren Rohrabschnitts 4 angeordnet sind. Die Auskragungen 8 sind als keilförmige Nuten ausgebildet und weisen jeweils eine aufrecht stehende Seitenfläche 9 und eine schräg abfallende Seitenfläche 10 auf.

Die aufrecht stehende Seitenfläche 9 einer jeden Auskragung 8 bildet einen Teil der aufrecht stehenden Seitenfläche 11 des äußeren Rohrabschnitts 4, wobei die aufrecht stehenden Seitenflächen 11 des äußeren Rohrabschnitts 4 im Beispiel der Fig. 1 bis 6 auf der in Fahrtrichtung F vorderen und hinteren Seite des äußeren Rohrabschnitts 4 angeordnet sind.

Die schräg abfallenden Seitenflächen 10 der Auskragungen 8 beginnen an dem oberen bzw. unteren Ende der aufrecht stehenden Seitenflächen 11 des äußeren Rohrabschnitts 4 und verlaufen dann schräg Richtung Längsachse des äußeren Rohrabschnitts 4, bis sie auf die waagerecht verlaufenden, oberen bzw. unteren Seitenflächen 12 des äußeren Rohrabschnitts 4 treffen. Die schräg abfallenden Seitenflächen 10 der Auskragungen 8 sind an der oberen und unteren Seite des äußeren Rohrabschnitts 4 angeordnet und laufen aufeinander zu. Somit sind die Auskragungen 8 keilförmig oder dreiecksförmig ausgebildet.

In alternativer Ausführung sind ebenso trapezförmige Auskragungen 8 möglich. In diesem Fall würden die schräg abfallenden Seitenflächen 10 der Auskragungen 8 nicht direkt auf die waagerecht verlaufenden Seitenflächen 12 des äußeren Rohrabschnitts 4 treffen sondern mit diesen über jeweils eine weitere, nicht dargestellte aufrecht stehende Seitenfläche der Auskragungen 8 verbunden sein.

Die aufrecht stehenden Seitenflächen 11 des äußeren Rohrabschnitts 4 weisen durch ihre Erweiterung um die aufrecht stehenden Seitenflächen 9 der Auskragungen 8 eine größere Fläche auf, als die waagerecht verlaufenden Seitenflächen 12 des äußeren Rohrabschnitts 4. Somit weisen die aufrecht stehenden Seitenflächen 11 des äußeren Rohrabschnitts 4 in vertikaler Richtung größere Abmessungen auf, als die waagerecht verlaufenden Seitenflächen 12.

Mittels Tragevorrichtungen 13 sind mit dem äußeren Rohrabschnitt 4 beabstandet zueinander mehrere als Säaggregate ausgebildete Arbeitswerkzeuge 3 befestigt. Die Tragevorrichtungen 13 weisen geeignete Aussparungen auf, mittels derer sie von oben in die Auskragungen 8 des äußeren Rohrabschnitts 4 eingehängt werden. Die Tragevorrichtungen 13 liegen dabei an den Außenseiten 14 der ihnen zugewandten Auskragungen 8 sowie an der die ihnen zugewandten Auskragungen 8 verbindenden aufrecht stehenden Seitenfläche 11 des äußeren Rohrabschnitts 4 an.

Der Schwerpunkt der in der beschriebenen Weise befestigten Arbeitswerkzeuge 3 liegt außerhalb des äußeren Rohrabschnitts 4. Somit erzeugt die in Schwerkraftsrichtung G gerichtete Gewichtskraft der Arbeitswerkzeuge 3 ein Drehmoment, welches an dem äußeren Rohrabschnitt 4 angreift und eine Torsionskraft TA des äußeren Rohrabschnitts 4 bewirkt. Gegen Torsionskräfte TA ist der äußere Rohrabschnitt 4 aufgrund seines durch den H-förmigen Querschnitt bedingten hohen Flächenträgheitsmoments sehr unempfindlich. Dadurch ist der äußere Rohrabschnitt 4 sehr formstabil.

Die im Inneren des äußeren Rohrabschnitts 4 gleitverschieblich gelagerten inneren Rohrabschnitte 5 weisen ein Vierkantprofil auf, wie es die Fig. 4 bis 6 zeigen. Mittels geeigneter Befestigungsmittel 15 sind die Vierkantprofile aufweisenden inneren Rohrabschnitte 5 formschlüssig und drehfest mit Verbindungselementen 16 verbunden.

Die mit Verbindungselementen 16 verbundenen inneren Rohrabschnitte 5 stützen sich über Gleitelemente 17 gegen die Innenseiten 18 der schräg abfallenden Seitenflächen 10 der Auskragungen 8 ab, wie Fig. 6 zeigt. Die Gleitelemente 17 sind lösbar an den Verbindungselementen 16 befestigt und bestehen aus einem Material, welches gegenüber den Innenseiten 18 des äußeren Rohrabschnitts 4 eine geringere Gleitreibung aufweist, als die Verbindungselemente 16. Somit dienen die Gleitelemente 17 der Verbesserung der Gleiteigenschaften zwischen den inneren Rohrabschnitten 5 und dem äußeren Rohrabschnitt 4.

Die Abmessungen der Auskragungen 8 des äußeren Rohrabschnitts 4, der Verbindungselemente 16 sowie der Gleitelemente sind derart gewählt, dass die Auflageflächen 19 der Verbindungselemente 16 parallel zu den schräg abfallenden Seitenflächen 10, insbesondere zu den Innenseiten 18 der schräg abfallenden Seitenflächen 10, der Auskragungen 8 verlaufen.

Zwischen den parallel zueinander verlaufenden Innenseiten 18 der schräg abfallenden Seitenflächen 10 und den Auflageflächen 19 der Verbindungselemente 16 sind die Gleitelemente 17 angeordnet. Sie weisen bevorzugt in der Längsrichtung des äußeren Rohrabschnitts 4 eine größere Ausdehnung auf, als in der zu dieser Längsrichtung senkrechten Richtung. Die Gleitelemente 17 liegen ganzflächig an den Innenseiten 18 der schräg abfallenden Seitenflächen 10 der Auskragungen an. Die ganzflächige Anlage stellt eine über die gesamte Fläche der Gleitelemente 17 gleichmäßige Kraftübertragung sicher und verhindert eine ungleichmäßige Abnutzung der Gleitelemente 17.

Die Gewichtskraft der inneren Rohrabschnitte 5 wirkt in Schwerkraftsrichtung G und wird über die beiden unteren Gleitelemente 17A,17B in den äußeren Rohrabschnitt 4 eingeleitet. In austeleskopierter Arbeitsstellung 7 des Teleskoprahmens 2 bewirkt die einseitige Lagerung der inneren Rohrabschnitte 5 innerhalb des äußeren Rohrabschnitts 4 Biegekräfte, wie es schwerkraftsbedingt bei Kragträgern allgemein bekannt ist. Die einseitige Lagerung der inneren Rohrabschnitte 5 innerhalb des äußeren Rohrabschnitts 4 führt bei angreifenden Biegekräften zu einer Hebelwirkung. Durch die Hebelwirkung werden die wirkenden Biegekräfte in eine in Schwerkraftsrichtung G und in einer entgegen der Schwerkraftsrichtung G wirkende Komponente aufgeteilt. Die in Schwerkraftsrichtung G wirkende Komponente der Biegekräfte wird analog zu der Gewichtskraft der inneren Rohrabschnitte 5 über die unteren Gleitelemente 17A,17B nach unten in den äußeren Rohrabschnitt 4 eingeleitet. Die entgegen der Schwerkraftsrichtung G wirkende Komponente der Biegekräfte wird über die oberen Gleitelemente 17C,17D nach oben in den äußeren Rohrabschnitt eingeleitet.

Beide Komponenten der Biegekräfte wirken in vertikale Richtung. Durch die in der beschriebenen Weise mittels der aufrecht stehenden Seitenflächen 9 der Auskragungen 8 in vertikaler Richtung vergrößerten Abmessungen der aufrecht stehenden Seitenflächen 11 des äußeren Rohrabschnitts 4 weist der äußere Rohrabschnitt 4 in vertikaler Richtung ein besonders großes axiales Flächenträgheitsmoment auf. Dieses große axiale Flächenträgheitsmoment in vertikaler Richtung bewirkt eine besonders große Formstabilität und Unempfindlichkeit des äußeren Rohrabschnitts 4 gegen in vertikaler Richtung angreifende Kräfte.

In zu dem äußeren Rohrabschnitt 4 analoger Weise ist jedem inneren Rohrabschnitt 5 des Teleskoprahmens 2 jeweils wenigstens ein Arbeitswerkzeug 3 zugeordnet. Wie in den Fig. 1 bis 3 gezeigt ist, ist im gewählten Ausführungsbeispiel jeweils ein Arbeitswerkzeug 3 am äußeren Ende der inneren Rohrabschnitte 5 befestigt. Analog zur zuvor beschriebenen Weise bewirkt der von der Längsachse der inneren Rohrabschnitte 5 entfernt liegende Schwerpunkt der an den inneren Rohrabschnitten 5 befestigten Arbeitswerkzeuge 3 durch die in Schwerkraftsrichtung G wirkende Gewichtskraft der Arbeitswerkzeuge 3 ein auf die inneren Rohrabschnitte 5 wirkendes Drehmoment. Das auf die inneren Rohrabschnitte 5 wirkende Drehmoment erzeugt eine auf die inneren Rohrabschnitte 5 wirkende Torsionskraft TI.

Die auf die inneren Rohrabschnitte 5 wirkende Torsionskraft TI führt zu einer Belastung der inneren Rohrabschnitte 5 welche die inneren Rohrabschnitte 5 gegen den äußeren Rohrabschnitt 4 verdreht. Diese Verdrehung wird durch die mithilfe der Verbindungselemente 16 und der Gleitelemente 17 sichergestellte formschlüssige Lagerung der inneren Rohrabschnitte 5 innerhalb des äußeren Rohrabschnitts 4 unterbunden. Die auf die inneren Rohrabschnitte 5 wirkenden Torsionskräfte TI werden dabei über sich diagonal gegenüberliegende Gleichelemente 17B und 17C in die Auskragungen 8 des äußeren Rohrabschnitts 4 eingeleitet. Dazu teilen sich die auf die inneren Rohrabschnitte 5 wirkenden Torsionskräfte TI in eine im Wesentlichen nach unten gerichtete Komponente TIu und eine im Wesentlichen nach oben gerichtete Komponente TIo auf, wie sie in Fig. 6 gezeigt sind.

Wie ebenso in Fig. 6 veranschaulicht, sind die Abmessungen der schräg abfallenden Seitenflächen 10 der Auskragungen 8 sowie der Verbindungselemente 16 derart gewählt, dass die in die Auskragungen 8 einzuleitenden Torsionskräfte TI,TIu,TIo zumindest annähernd senkrecht in die schräg abfallenden Seitenflächen 10 der Auskragungen 8 eingeleitet werden. Somit liegen die Gleitelemente 17,17B,17C ganzflächig an den Innenseiten 18 der schräg abfallenden Seitenflächen 10 der Auskragungen 8 an. Dadurch wird eine gleichmäßige und vor allem ganzflächige Kraftübertragung zwischen den inneren Rohrabschnitten 5 und dem äußeren Rohrabschnitt 4 erreicht, welche einen ungleichmäßigen Verschleiß der Gleitelemente 17 verhindert und die auftretende Gleitreibung reduziert.

Sämtliche der beschriebenen auftretenden Kräfte, die zwischen den inneren Rohrabschnitten 5 und dem äußeren Rohrabschnitt 4 wirken, werden in der jeweils beschriebenen Weise in den äußeren Rohrabschnitt 4 eingeleitet Diese Einleitung der Kräfte in den äußeren Rohrabschnitt 4 erfolgt stets über die ganzflächig an den Innenseiten 18 der schräg abfallenden Seitenflächen 10 der Auskragungen 8 anliegenden Gleitelemente 17. Somit ist eine ganzflächige und gleichmäßige Kraftübertragung sichergestellt, welche einen ungleichmäßigen Verschleiß der Gleitelemente 17 verhindert. Zusätzlich wird durch die große Auflagefläche der herrschende Druck und damit die Gleitreibung verringert, welches zu einer Energieeinsparung und erheblich geringerem Bauteilverschleiß während des Teleskopierens führt.

Durch die Einleitung der auftretenden Kräfte in die Bereiche der Auskragungen 8 des äußeren Rohrabschnitts 4 ist gewährleistet, dass die Kräfte in aufgrund hoher Flächenträgheitsmomente in den Bereichen der Auskragungen 8 in besonders formstabile Bereiche des äußeren Rohrabschnitts eingeleitet werden. Dadurch ergibt sich erfindungsgemäß ein Teleskoprahmen 2, welcher in besonderem Maße unempfindlich gegen einwirkende Kräfte und daraus resultierenden Verformungen ist.

## Patentansprüche

1. Mehrreihige Einzelkornsämaschine (1) mit einem Rahmen, der zumindest ein quer zur Fahrtrichtung (F) angeordnetes, teleskopierbar in seiner Länge veränderbares Rahmenelement (2) aufweist, wobei dem zumindest einen Rahmenelement (2) mehrere, beispielsweise als Säaggregate ausgebildete, Arbeitswerkzeuge (3) zugeordnet sind, und das zumindest eine Rahmenelement (2) einen äußeren Rohrabschnitt (4) und mindestens einen inneren Rohrabschnitt (5) umfasst, wobei der mindestens eine innere Rohrabschnitt (5) gleitverschieblich innerhalb des äußeren Rohrabschnitts (4) gelagert ist, wobei zumindest der äußere Rohrabschnitt (4) ein zumindest annähernd H-förmiges Querschnittsprofil aufweist,
**dadurch gekennzeichnet, dass** die Auskragungen (8) des H-förmigen Querschnittsprofils als keilförmige Nuten ausgebildet sind, und der mindestens eine innere Rohrabschnitt (5) mittels Gleitelementen (17) formschlüssig innerhalb des äußeren Rohrabschnitts (4) geführt ist, wobei die Gleitelemente (17) an den Innenflächen (18) der keilförmigen Auskragungen (8) des zumindest annähernd H-förmigen Querschnittsprofils des äußeren Rohrabschnitts (4) anliegen.

2. Einzelkornsämaschine (1) nach Anspruch 1,
**dadurch gekennzeichnet, dass** die keilförmigen Auskragungen (8) des zumindest annähernd H-förmigen Querschnittsprofils des äußeren Rohrabschnitts (4) ausgehend von den Außenkanten des äußeren Rohrabschnitts (4) in Richtung der Mitte der Seitenflächen (12) des äußeren Rohrabschnitts (4) schräg abfallende Seitenflächen (10) aufweisen.

3. Einzelkornsämaschine (1) nach zumindest einem der vorangegangenen Ansprüche,
**dadurch gekennzeichnet, dass** die schrägabfallenden Seitenflächen (10) der Auskragungen (8) des äußeren Rohrabschnitts (4) parallel zueinander verlaufende Innenseiten (18) und Außenseiten (14) aufweisen.

4. Einzelkornsämaschine (1) nach zumindest einem der vorangegangenen Ansprüche,
**dadurch gekennzeichnet, dass** jeweils eine als keilförmige Nut ausgebildete Auskragung (8) an den vier Kanten zumindest des äußeren Rohrabschnitts (4) angeordnet ist.

5. Einzelkornsämaschine (1) nach zumindest einem der vorangegangenen Ansprüche,
**dadurch gekennzeichnet, dass** die schräg abfallenden Seitenflächen (10) der keilförmigen Auskragungen (8) auf der Ober- und der Unterseite des äußeren Rohrabschnitts angeordnet sind.

6. Einzelkornsämaschine (1) nach zumindest einem der vorangegangenen Ansprüche,
**dadurch gekennzeichnet, dass** die schräg abfallenden Seitenflächen zumindest (10) annähernd aufeinander zulaufen.

7. Einzelkornsämaschine (1) nach zumindest einem der vorangegangenen Ansprüche,
**dadurch gekennzeichnet, dass** der mindestens eine innere Rohrabschnitt (5) innerhalb des äußeren Rohrabschnitts (4) durch die formschlüssige Führung mittels der Gleitelemente (17) zentriert ist.

8. Einzelkornsämaschine (1) nach zumindest einem der vorangegangenen Ansprüche,
**dadurch gekennzeichnet, dass** die Gleitelemente (17) zumindest annähernd ganzflächig an den Innenflächen (18) der Auskragungen (8) des zumindest annähernd H-förmigen Querschnittsprofils des äußeren Rohrabschnitts (4) anliegen.

9. Einzelkornsämaschine (1) nach zumindest einem der vorangegangenen Ansprüche,
**dadurch gekennzeichnet, dass** die Gleitelemente (17) zumindest annähernd ganzflächig an den Innenflächen (18) der schräg aufeinander zulaufenden Seitenflächen (10) der Auskragungen (8) des zumindest annähernd H-förmigen Querschnittsprofils des äußeren Rohrabschnitts (4) anliegen.

10. Einzelkornsämaschine (1) nach zumindest einem der vorangegangenen Ansprüche,
**dadurch gekennzeichnet, dass** sich bei einem Verdrehen des mindestens einen inneren Rohrabschnitts (5) gegen den äußeren Rohrabschnitt (4) der zumindest eine innere Rohrabschnitt (5) über die Gleitelemente (17) gegen die Innenseite (18) der aufeinander zulaufenden Seitenflächen (10) der keilförmigen Auskragungen (8) des zumindest annähernd H-förmigen Querschnittsprofils des äußeren Rohrabschnitts (4) abstützt.

11. Einzelkornsämaschine (1) nach Anspruch 7,
**dadurch gekennzeichnet, dass** die Abmessungen und/oder Innenwinkel der keilförmigen Auskragungen (8) in Abhängigkeit von den Abmessungen des äußeren und des mindestens einen inneren Rohrabschnitts (4) derart gewählt sind, dass die bei Torsion (TI) des mindestens einen inneren Rohrabschnitts (5) um die gemeinsame Längsachse des äußeren (4) und mindestens einen inneren Rohrabschnitts (5) auftretenden Torsionskräfte zumindest annähernd senkrecht in die Innenflächen (18) der keilförmigen Auskragungen (8) des äußeren Rohrabschnitts (4) eingeleitet werden.

## Claims

1. Multi-row single grain seed drill (1) having a frame that has at least one frame element (2) that is arranged transversely to the direction of travel (F) and is telescopically variable in length, wherein the at least one frame element (2) is assigned a plurality of work tools (3), configured for example as sowing units, and the at least one frame element (2) comprises an outer tube portion (4) and at least one inner tube portion (5), wherein the at least one inner tube portion (5) is mounted so as to be slidable within the outer tube portion (4), wherein at least the outer tube portion (4) has an at least approximately H-shaped cross-sectional profile, **characterized in that** the projections (8) of the H-shaped cross-sectional profile are configured as wedge-shaped grooves, and the at least one inner tube portion (5) is guided within the outer tube portion (4) in a form-fitting manner by means of sliding elements (17), wherein the sliding elements (17) bear against the inner faces (18) of the wedge-shaped projections (8) of the at least approximately H-shaped cross-sectional profile of the outer tube portion (4).

2. Single grain seed drill (1) according to Claim 1, **characterized in that** the wedge-shaped projections (8) of the at least approximately H-shaped cross-sectional profile of the outer tube portion (4) have obliquely dropping side faces (10) starting from the outer edges of the outer tube portion (4) in the direction of the middle of the side faces (12) of the outer tube portion (4).

3. Single grain seed drill (1) according to at least one of the preceding claims,
**characterized in that** the obliquely dropping side faces (10) of the projections (8) of the outer tube portion (4) have inner sides (18) and outer sides (14) that extend parallel to one another.

4. Single grain seed drill (1) according to at least one of the preceding claims,
**characterized in that** a projection (8) configured as a wedge-shaped groove is arranged at each of the four corners of at least the outer tube portion (4).

5. Single grain seed drill (1) according to at least one of the preceding claims,
**characterized in that** the obliquely dropping side faces (10) of the wedge-shaped projections (8) are arranged on the top side and underside of the outer tube portion.

6. Single grain seed drill (1) according to at least one of the preceding claims,
**characterized in that** the obliquely dropping side faces (10) extend at least approximately towards one another.

7. Single grain seed drill (1) according to at least one of the preceding claims,
**characterized in that** the at least one inner tube portion (5) is centred within the outer tube portion (4) by the form-fitting guide by means of the sliding elements (17).

8. Single grain seed drill (1) according to at least one of the preceding claims,
**characterized in that** the sliding elements (17) bear at least approximately fully against the inner faces (18) of the projections (8) of the at least approximately H-shaped cross-sectional profile of the outer tube portion (4).

9. Single grain seed drill (1) according to at least one of the preceding claims,
**characterized in that** the sliding elements (17) bear at least approximately fully against the inner faces (18) of the side faces (10), extending obliquely towards one another, of the projections (8) of the at least approximately H-shaped cross-sectional profile of the outer tube portion (4).

10. Single grain seed drill (1) according to at least one of the preceding claims,
**characterized in that** when the at least one inner tube portion (5) is rotated with respect to the outer tube portion (4), the at least one inner tube portion (5) is supported via the sliding elements (17) against the inner side (18) of the side faces (10), extending towards one another, of the wedge-shaped projections (8) of the at least approximately H-shaped cross-sectional profile of the outer tube portion (4).

11. Single grain seed drill (1) according to Claim 7,
**characterized in that** the dimensions and/or internal angles of the wedge-shaped projections (8) are chosen depending on the dimensions of the outer and of the at least one inner tube portion (4) such that the torsional forces that arise upon twisting (TI) of the at least one inner tube portion (5) about the common longitudinal axis of the outer (4) and at least one inner tube portion (5) are introduced at least approximately perpendicularly into the inner faces (18) of the wedge-shaped projections (8) of the outer tube portion (4).

## Revendications

1. Semoir mono-graine à plusieurs rangées (1) comprenant un cadre qui comporte au moins un élément de cadre (2) disposé transversalement au sens de roulement (F) et réglable de manière télescopique dans le sens de sa longueur, l'au moins un élément de cadre (2) étant associé à une pluralité d'outils de travail (3) conçus par exemple sous la forme d'unités d'ensemencement et l'au moins un élément de cadre (2) comprenant une partie tubulaire extérieure (4) et au moins une partie tubulaire intérieure (5), l'au moins une partie tubulaire intérieure (5) étant montée de manière coulissante dans la partie tubulaire extérieure (4), au moins la partie tubulaire extérieure (4) ayant un profil en coupe transversale au moins à peu près en forme de H, **caractérisé en ce que** les saillies (8) du profil en coupe transversale en forme de H sont conçues comme des gorges en forme de coin, et l'au moins une partie tubulaire intérieure (5) étant guidée par complémentarité de formes à l'intérieur de la partie tubulaire extérieure (4) au moyen d'éléments coulissants (17), les éléments coulissants (17) venant en appui sur les surfaces intérieures (18) des saillies (8) en forme de coin du profil en coupe transversale au moins à peu près en forme de H de la partie tubulaire extérieure (4).

2. Semoir mono-graine (1) selon la revendication 1, **caractérisé en ce que** les saillies (8) en forme de coin du profil en coupe transversale au moins à peu près en forme de H de la partie tubulaire extérieure (4) comportent des surfaces latérales (10) s'étendant obliquement depuis les bords extérieurs de la partie tubulaire extérieure (4) en direction du centre des surfaces latérales (12) de la partie tubulaire extérieure (4).

3. Semoir mono-graine (1) selon l'une au moins des revendications précédentes,
**caractérisé en ce que** les surfaces latérales (10), s'étendant obliquement, des saillies (8) de la partie tubulaire extérieure (4) comportent des côtés intérieurs (18) et des côtés extérieurs (14) qui s'étendent parallèlement entre eux.

4. Semoir mono-graine (1) selon l'une au moins des revendications précédentes,
**caractérisé en ce qu'**une saillie (8), conçue sous la forme d'une gorge en forme de coin, est disposée au niveau des quatre bords d'au moins la partie tubulaire extérieure (4).

5. Semoir mono-graine (1) selon l'une au moins des revendications précédentes,
**caractérisé en ce que** les surfaces latérales (10), s'étendant obliquement, des saillies (8) en forme de coin sont disposées sur les côtés supérieur et inférieur de la partie tubulaire extérieure.

6. Semoir mono-graine (1) selon l'une au moins des revendications précédentes,
**caractérisé en ce que** les surfaces latérales (10), s'étendant obliquement, sont au moins à peu près convergentes.

7. Semoir mono-graine (1) selon l'une au moins des revendications précédentes,
**caractérisé en ce que** l'au moins une partie tubulaire intérieure (5) est centrée à l'intérieur de la partie tubulaire extérieure (4) par guidage par complémentarité de formes au moyen des éléments coulissants (17).

8. Semoir mono-graine (1) selon l'une au moins des revendications précédentes,
**caractérisé en ce que** les éléments coulissants (17) viennent en appui au moins à peu près sur toute l'étendue des surfaces intérieures (18) des saillies (8) du profilé en coupe transversale au moins à peu près en forme de H de la partie tubulaire extérieure (4) .

9. Semoir mono-graine (1) selon l'une au moins des revendications précédentes,
**caractérisé en ce que** les éléments coulissants (17) viennent en appui au moins à peu près sur toute l'étendue des surfaces intérieures (18) des surfaces latérales (10), obliquement convergentes, des saillies (8) du profil en coupe transversale au moins à peu près en forme de H de la partie tubulaire extérieure (4).

10. Semoir mono-graine (1) selon l'une au moins des revendications précédentes,
**caractérisé en ce que**, lors de la rotation de l'au moins une partie tubulaire intérieure (5) vers la partie tubulaire extérieure (4), l'au moins une partie tubulaire intérieure (5) s'appuie par le biais des éléments coulissants (17) contre le côté intérieur (18) des surfaces latérales convergentes (10) des saillies (8) en forme de coin du profil en coupe transversale au moins à peu près en forme de H de la partie tubulaire extérieure (4).

11. Semoir mono-graine (1) selon la revendication 7,
**caractérisé en ce que** les dimensions et/ou l'angle intérieur des saillies (8) en forme de coin sont choisis en fonction des dimensions des parties tubulaires extérieures et intérieures (4) de telle sorte que, lors de la torsion (TI) de l'au moins une partie tubulaire intérieure (5), des forces de torsion s'exerçant autour de l'axe longitudinal commun de la partie tubulaire extérieure (4) et d'au moins une partie tubulaire intérieure (5) soient injectées au moins à peu près perpendiculairement dans les surfaces intérieures (18) des saillies (8) en forme de coin de la partie tubulaire extérieure (4).
